# EUROPEAN PATENT APPLICATION

(11) **EP 4 763 919 A1**
(43) Date of publication of application: **24.06.2026**
(21) Application number: 24854170.8
(22) Date of filing: 08.08.2024
(51) Int. Cl.: C08L 83/04, C08K 3/22, C08K 3/28

(54) **THERMALLY CONDUCTIVE COMPOSITION, THERMALLY CONDUCTIVE MEMBER, AND HEAT DISSIPATION STRUCTURE**

(30) Priority: 17.08.2023 JP 2023133023
(71) Applicant: Dow Toray Co., Ltd., Tokyo 140-8617 (JP)
(72) Inventor: OTA, Kenji, Ichihara-shi Chiba 299-0108 (JP); UEKI, Hiroshi, Ichihara-shi Chiba 299-0108 (JP)
(74) Representative: Elkington and Fife LLP
(86) International application number: PCT/JP2024/028465
(87) International publication number: WO 2025/037580

(57) **Abstract**

PROBLEM

To provide a thermally conductive composition that has extremely high thermal conductivity, is excellent in extrusion workability and filling into small-volume packages, and suppresses changes in hardness and deterioration in heat dissipation performance even after heat aging, as well as a thermally conductive member made thereof, and a heat dissipation structure using the same.

SOLUTION

A thermally conductive composition, comprising:
(A) one or more matrix polymers having a viscosity at 25°C in a range of 10 to 1,000,000 mPa·s;
(B) one or more type of thermally conductive filler; and
(C) an organopolysiloxane expressed by general formula (1)
(In the formula, R¹ represents a monovalent hydrocarbon groups not having
a carbon-carbon double bond, and R² represents a hydrogen atom or the like, a is a number from 40 to 90, and b is a number from 1 to 3) wherein the amount of Component (B) is in a range of 60 to 95 vol.% based on the total solid content of the composition; as well as a use thereof.

## Description

### TECHNICAL FIELD

The present invention relates to a thermally conductive composition that has extremely high thermal conductivity, and when cured, has sufficient flexibility and stress relaxation properties for practical use, and even when heat-aged at high temperatures, the cured product changes little in hardness and maintains flexibility, thus maintaining good heat dissipation properties for heat dissipation sites over a long period of time. The thermally conductive composition also has good extrudability and dischargeability from cartridges and the like, allowing easy filling into small quantity packages and providing excellent work efficiency during application. The present invention also relates to a thermally conductive member made of the composition, and a heat dissipation structure using the composition.

### BACKGROUND ART

In recent years, with the increasing density and integration of printed circuit board and hybrid ICs equipped with electronic components such as transistors, ICs, and memory elements, and the increasing capacity of secondary batteries (cell type), thermally conductive silicone compositions containing an organopolysiloxane and a thermally conductive filler such as aluminum oxide powder, aluminum hydroxide powder, or zinc oxide powder have come into widespread use to efficiently dissipate the heat generated by electronic components, batteries, and other electronic and electrical devices. Thermally conductive silicone compositions are expected to have excellent heat resistance, and even when blended with high concentrations and high-volume percentages of thermally conductive fillers, the cured product is rubber-like, and thus has a certain degree of flexibility and stress relaxation properties, maintains conformability and adhesion to heat sources in the heat dissipating structures, and maintains heat dissipation performance.
In recent years, in order to accommodate high heat dissipation, thermally conductive silicone compositions containing large amounts of thermally conductive filler have been proposed. In particular, in recent years, the use of boron nitride powder as a thermally conductive filler with excellent thermal conductivity has been proposed (for example, Patent Document 1, and the like).

However, in thermally conductive silicone compositions that combine these thermally conductive fillers, when a high amount of thermally conductive filler such as aluminum nitride powder is blended, the rubber properties inherent in the cured polymer silicone product generally tend to degrade, and if the amount of the thermally conductive filler is too high, the resulting cured product will be too hard, causing gaps to form between the product and the heat dissipation target, impairing conformability and stress relaxation properties, and in some cases, achieving sufficient heat dissipation properties might not be possible. In other words, in curable thermally conductive silicone compositions, controlling the hardness of the thermally conductive cured material is an extremely important issue in achieving heat dissipation. In addition, when a large amount of a thermally conductive filler such as aluminum nitride powder is added, the fluidity of the composition itself tends to be impaired, and when attempting to fill a cartridge, dispenser, or the like with the aim of applying a small amount or a pinpoint, a sufficient extrusion amount cannot be ensured, thus inhibiting filling, particularly with the aim of packaging a small amount, and workability and coatability after adding the filler may decrease, resulting in a decrease in work efficiency. In addition, uniformly dispersing the thermally conductive filler in the silicone composition might be difficult, which may adversely affect the expected thermal conductivity, curing properties, and workability during commercial production. Therefore, highly thermally conductive silicone compositions containing a high amount of a thermally conductive filler such as aluminum nitride powder, and in particular, those having a thermal conductivity of 9.0 W/mK or greater, have room for improvement in terms of performance and workability for industrial widespread use.

On the other hand, it has been proposed to use a methylpolysiloxane containing a trifunctional hydrolyzable group at one end (sometimes referred to as a "macromonomer-type treating agent") in a thermally conductive silicone rubber composition in order to adjust the viscosity and plasticity of the thermally conductive filler (Patent Documents 2 to 9). These documents propose that a mixture containing a matrix polymer as a main component, a thermally conductive filler, and a macromonomer-type treating agent for these components (sometimes referred to as a "base composition") be heated and mixed at a high temperature, followed by cooling, thereby suppressing increases in viscosity and plasticity of the thermally conductive composition containing a large amount of thermally conductive filler. They also disclose that the degree of siloxane polymerization is in a range of about 5 to 100 or about 100 to 200. However, the examples in these documents only use siloxanes with a degree of polymerization of about 30 or more than 100, and there is no mention nor suggestion of the significance of limiting the degree of polymerization to a specific range, and in particular, of the effects on extrusion workability, heat aging properties of the cured product, or thermal conductivity.

Additionally, these documents do not describe nor suggest further adjusting the hardness of the cured product of hydrosilylation-curable silicone compositions by blending fatty acids or the like, or about using these compositions in combination with heat resistance-imparting agents such as phthalocyanine compounds.

### RELATED ART DOCUMENTS

### PATENT DOCUMENTS

Patent Document 1: Japanese Unexamined Patent Application Publication H7-330927
Patent Document 2: Japanese Unexamined Patent Application Publication 2000-256558 (Japanese Patent No. 3543663)
Patent Document 3: International Publication No. 2002/092693 (U.S. Patent No. 7,329,706)
Patent Document 4: International Publication WO 2022/249754
Patent Document 5: Japanese Unexamined Patent Application Publication 2017-75202 (Japanese Patent No. 6524879)
Patent Document 6: International Publication WO 2018/093030
Patent Document 7: International Publication WO 2015/040777
Patent Document 8: Japanese Unexamined Patent Application Publication 2021-113290 (Japanese Patent No. 7306278)
Patent Document 9: International Publication WO 2019/093052

### SUMMARY OF THE INVENTION

### PROBLEM TO BE SOLVED BY THE INVENTION

Furthermore, the present inventors have discovered a new problem with hydrosilylation reaction curable thermally conductive silicone compositions. As described above, when a thermally conductive silicone composition containing a large amount of thermally conductive filler is cured, the cured reaction product tends to harden, and there is often a trade-off between high thermal conductivity and flexibility of the cured reaction product. However, even when thermally conductive silicone compositions are designed by adjusting the hardness and thermal conductivity of the cured material, in the case of high heat-dissipating compositions that contain a very high volume% of thermally conductive fillers (for example, 60 vol.% or more of the total composition (solid content)) as described above, the cured material may harden rapidly after heating and aging, and will lose flexibility and rubber elasticity. The cured material may harden rapidly after heat aging and lose flexibility and rubber elasticity, resulting in loss of stress relaxation, as well as conformability and adhesion in the heat-dissipating structure. As a result, the originally planned heat dissipation characteristics may not be fully realized.

In light of the foregoing, an object of the present invention is to provide a thermally conductive composition which has high thermal conductivity due to including a thermally conductive filler such as aluminum nitride powder or the like at a very high volume percentage, and a thermally conductive member made from the cured product, having sufficient flexibility and stress relaxation properties for practical use, exhibiting little change in hardness and maintaining flexibility even when heat-aged at high temperature, thereby maintaining good heat dissipation properties for heat dissipation sites over a long period of time, which is easy to extrude from a cartridge, dispenser, or the like, and being particularly excellent in terms of fillability, workability, and applicability for small quantity packages; as well as a thermally conductive member made from the composition, and a heat dissipation structure using the composition.

### MEANS FOR SOLVING THE PROBLEM

As a result of extensive studies, the present inventors discovered that the abovementioned problem can be solved by a thermally conductive composition containing:
(A) one or more type of matrix polymer having a viscosity at 25°C in a range of 10 to 1,000,000 mPa·s;
(B) one or more type of thermally conductive filler; and
(C) an organopolysiloxane expressed by general formula (1): 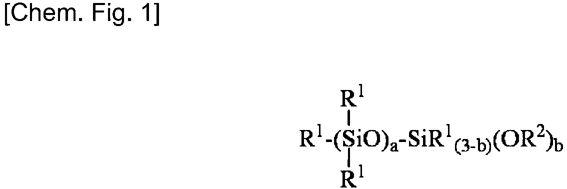
   (where, R¹ independently represents unsubstituted or substituted monovalent hydrocarbon groups not having a carbon-carbon double bond; R² independently represents a hydrogen atom, alkyl group, alkoxyalkyl group, or acyl group; a represents an integer from 40 to 90, and b represents an integer from 1 to 3) wherein
   the amount of Component (B) is in a range of 60 to 95 volume% based on the total solid content of the composition, and have thus achieved the present invention. In other words, the composition is a thermally conductive composition that contains a large amount (specifically, in a range of 60 to 95 vol.%, based on the total solid content of the composition) of a thermally conductive filler such as aluminum nitride powder in order to impart high thermal conductivity. However, by selectively using an organopolysiloxane represented by general formula (1) and having a specific degree of siloxane polymerization, it is possible to achieve both extremely high thermal conductivity and coatability and workability of the composition itself, such as during extrusion, which have traditionally been in a trade-off relationship. Furthermore, if the composition is curable and reactive, in addition to flexibility (in other words, rubber properties), the change in hardness of the cured product is small even when heat-aged at high temperature, allowing flexibility to be maintained and achieving good heat dissipation properties for heat dissipation sites that can be maintained for a long period of time. Furthermore, the composition has particularly excellent workability during extrusion from small-volume packages.

Note that the composition may further contain: a certain amount of a surface treatment agent which is another organosilicon compound; at least one fatty acid compound selected from fatty acids, fatty acid esters, and fatty acid metal salts; and a heat resistance imparting agent (preferably a phthalocyanine compound and/or carbon black). Furthermore, when preparing the composition, the matrix polymer (preferably an organopolysiloxane) that is the main component of the composition, the thermally conductive filler, and a component that functions as a specific surface treatment agent (the aforementioned Component (C)) may be mixed together and heated (base heat), or the matrix polymer (preferably an organopolysiloxane), the thermally conductive filler, and Component (C) may be mixed and added to the mixture after base heating, together with the other components.

### EFFECT OF THE INVENTION

The present invention provides a thermally conductive composition or a curing reaction product thereof, which has an extremely high thermal conductivity of 9.0 W/mK or more, while also having practically sufficient coatability, flexibility, and stress relaxation properties, and a thermally conductive member made from the same, and which can be formed.The thermally conductive composition is also extremely easy to extrude from a cartridge, dispenser, etc., and can be relatively easily filled into small-volume packages such as syringes, and is therefore particularly excellent in workability and coatability. Furthermore, if the composition is curable and reactive, in addition to flexibility (or in other words, rubber physical properties), the hardness of the cured product changes little, and flexibility and stress relaxation properties are maintained even when heat-aged at high temperatures, so good heat dissipation properties for heat dissipation sites can be maintained for a long period of time. Furthermore, the present invention can provide the thermally conductive composition or a thermally conductive member obtained by curing the composition, and a heat dissipation structure using the same (particularly, a heat dissipation structure for an electric or electronic device, including a heat dissipation structure for an electric or electronic component and a heat dissipation structure for a secondary battery).

Note that by further adding the aforementioned fatty acid-based compound and heat resistance imparting agent to the cured product of the thermally conductive composition of the present invention as needed, the change in hardness and the occurrence of cracks during heat aging can be further improved. When applied to heat dissipation targets having various shapes, the composition is resistant to peeling from the heat-generating component or the occurrence of voids (including the occurrence of voids due to partial/temporary peeling from the member, even when used at a high temperature for a long period of time; the same applies hereinafter) due to vibration or the like, and continues to maintain excellent adhesion and conformability, which provides an advantage that the heat dissipation efficiency at the initial stage of application is maintained without being impaired. Therefore, compared to conventional products, the present invention has an advantage of operation efficiency during extrusion, superior durability and heat dissipation performance of heat-dissipating members, applicability to heat-dissipating objects with various shapes, and resistance to peeling even when used for assembly and fabrication under high temperature, and when used in heat dissipating processes at high temperature for a long period of time.

### DESCRIPTION OF THE PREFERRED EMBODIMENTS

### [Thermally conductive composition]

The composition of the present invention is a thermally conductive composition that contains a matrix polymer, which may be preferably an organopolysiloxane or the like, a thermally conductive filler, and a macromonomer-type treating agent having a specific degree of siloxane polymerization expressed by the aforementioned general formula (1), and the amount of the thermally conductive filler is within a specified range. In particular, by selectively using a macromonomer-type treatment agent with a specific degree of siloxane polymerization, the cured product will have extremely high thermal conductivity and rubber physical properties, and even when heat-aged at high temperatures, the hardness of the cured product changes little, and flexibility and stress relaxation properties are maintained, and thus good heat dissipation properties for heat dissipation sites can be maintained for a long period of time. Furthermore, the thermally conductive composition of the present invention can be extruded very easily from a cartridge, dispenser, or the like, and has excellent filling properties even for small packages, as well as excellent workability and work efficiency during application (particularly extrusion workability).

Note that the composition of the present invention may be used in an uncured state as a grease or gap filler material, or may be a composition that has curing reactivity via a hydrosilylation reaction and has a specific SiH/alkenyl group reaction ratio. If the composition has curing reactivity, the composition may contain: other surface treatment agents; at least one type of compound selected from fatty acids, fatty acid esters, and fatty acid metal salts (hereinafter, sometimes referred to as "fatty acid compounds"); and a heat resistance imparting agent.

The composition may be used in an uncured state or may be reactively cured. Specifically, Component (A) preferably contains (A0) one or more organopolysiloxanes having a viscosity at 25°C in a range of 10 to 1,000,000 mPa·s, and may be one or more organopolysiloxane selected from (A1) organopolysiloxanes that do not have a curing reactive group with a carbon-carbon double bond in the molecule, and (A2) organopolysiloxanes that have a curing reactive group with a carbon-carbon double bond in the molecule. A curing reactive composition using Component (A2) may further contain (D) an organohydrogenpolysiloxane and (E) a catalytic amount of a hydrosilylation reaction catalyst, and may optionally contain (F) a heat resistance imparting agent and (G) a fatty acid compound. Additionally, the composition may contain hydrosilylation inhibitors, adhesion promoters, organic solvents, and other additives. The composition of the present invention may be in the form of a one-component composition or a multi-component composition such as a two-component composition. Hereinafter, each component, added amount thereof, and the like will be described.

Hereinafter, the average particle size of each Component (including spherical to irregular shapes) of the thermally conductive filler, which is Component (B), is the cumulative average particle size D₅₀ (median size) in the volume-based particle size distribution measured by the laser diffraction scattering method, and can be measured using a laser diffraction particle size distribution measuring device that is widely used in the field. Furthermore, based on the same principle, the amount (volume%) of coarse particles with a certain particle size or less can be determined using a laser diffraction particle size distribution analyzer. Furthermore, Component (C), which will be described later, does not overlap with the organopolysiloxane that is Component (A), and is therefore excluded from the scope thereof.

### [(A) Matrix polymer]

Component (A) is a matrix polymer for supporting the thermally conductive filler, and any curable or non-curable, liquid or flowable polymeric material having a viscosity at 25°C in a range of 10 to 1,000,000 mPa·s, preferably in a range of 10 to 10,000 mPa·s, can be used without any particular limitation. For example, organopolysiloxanes, liquid polyurethane resins, liquid polyester resins, liquid acrylic resins, liquid polyol resins, liquid butadiene rubber, liquid isoprene rubber, liquid styrene-butadiene rubber, and the like can be used without limitation. However, the thermally conductive composition according to the present invention is applied to semiconductor devices and the like that generate high temperatures, so the thermally conductive composition particularly preferably contains one or more organopolysiloxanes (A0) that have excellent heat resistance and cold resistance and have a viscosity at 25°C in a range of 10 to 1,000,000 mPa·s.

The organopolysiloxane of Component (A0) is the main component of the composition, and contains one or more organopolysiloxane having a viscosity at 25°C in a range of 10 to 1,000,000 mPa·s. The viscosity of Component (A) at 25°C is preferably within a range of 10 to 100,00 mPa·s, more preferably within a range of 10 to 10,000 mPa·s. If the viscosity of Component (A) is less than 10 mPa·s, the mechanical strength of the resulting organopolysiloxane composition or cured product thereof tends to decrease. On the other hand, if the viscosity of Component (A) exceeds 100,000 mPa·s, the resulting composition will have too high viscosity, and the handling workability and coatability on fine parts tend to decrease. Note that low molecular weight siloxane oligomers (octamethyltetrasiloxane (D4) and decamethylpentasiloxane (D5)) are preferably reduced or removed from Component (A), from the perspective of preventing contact failure.

Component (A) may contain one or more types of organopolysiloxanes. The molecular structure of such an organopolysiloxane is not particularly limited, with examples thereof including straight-chain, branched, cyclic, three-dimensional network structures (including so-called resinous three-dimensional structures), and combinations thereof.

Depending on the presence or absence of curing reactive groups in Component (A), the composition can be designed as a curable or non-curable composition. Here, the curing reactive group is a functional group that can cure (including gelling, the same applies hereinafter) the entire composition through a crosslinking reaction, and the type of the curing reactive group is not particularly limited, but is preferably a hydrosilylation reactive group or a radical polymerization reactive group, and is particularly preferably a curing reactive group having a carbon-carbon double bond in the molecule. Furthermore, the curing reactive group having a carbon-carbon double bond in the molecule is preferably at least one organic group selected from alkenyl groups, methacryloxy group-containing organic groups, and acryloxy group-containing organic groups, and is particularly preferably an alkenyl group having 2 to 20 carbon atoms.

Preferably, Component (A) is one or more organopolysiloxanes selected from (A1) organopolysiloxanes that do not have a curing reactive group with a carbon-carbon double bond in the molecule, and (A2) organopolysiloxanes that have a curing reactive group with a carbon-carbon double bond in the molecule, and using only Component (A1), using only Component (A2), or using both in combination is possible. Note that when Component (A2) is used as at least a portion of Component (A), the composition can be designed to be curable.

Component (A1) is an organopolysiloxane that has a carbon-carbon double bond in the molecule but does not contain a curing reactive group typified by the aforementioned alkenyl groups, methacryloxy group-containing organic groups, or acryloxy group-containing organic groups in the molecule, and therefore is suitable as a base agent for non-curable thermally conductive organopolysiloxane compositions, such as thermally conductive greases and non-curable thermally conductive gap filler materials. The functional group in Component (A1) is a group other than a curing reactive functional group, and examples thereof include: monovalent hydrocarbon groups other than alkenyl groups, such as alkyl groups like methyl groups and the like; aryl groups such as phenyl groups and the like; and halogenated alkyl groups such as 3,3,3-trifluoropropyl groups and the like, with methyl or phenyl groups being industrially preferred.

Particularly preferred examples of Component (A1) are linear, non-curable organopolysiloxanes, such as dimethylpolysiloxanes terminally blocked with trimethylsiloxy groups, dimethylsiloxane-methylphenylsiloxane copolymers terminally blocked with trimethylsiloxy groups, dimethylsiloxane copolymers terminally blocked with silanol groups, polymers in which a portion of the methyl groups in these polymers have been substituted with alkyl groups other than methyl groups, such as ethyl groups, propyl groups, or the like, or with halogenated alkyl groups such as 3,3,3-trifluoropropyl groups and the like, as well as mixtures of two or more of these polymers. Note that as mentioned above, the organopolysiloxane, which is Component (C) described below, is excluded from the scope of Component (A), and these components do not overlap.

Component (A2) is an organopolysiloxane having a curable reactive group with a carbon-carbon double bond in the molecule, and the curable reactive group having a carbon-carbon double bond in the molecule has at least one organic group selected from alkenyl groups, methacryloxy group-containing organic groups, and acryloxy group-containing organic groups in the molecule. Therefore, Component (A2) is suitable as a base agent for curable thermally conductive organopolysiloxane compositions, such as curable thermally conductive elastomers, thermally conductive gels, and curable thermally conductive gap filler materials.

Examples of the alkenyl groups in a molecule of Component (A2) include vinyl groups, allyl groups, butenyl groups, hexenyl groups, and the like. Furthermore, examples of organic groups other than alkenyl groups in Component (A2) include: methyl groups and other alkyl groups; phenyl groups and other aryl groups; and monovalent hydrocarbon groups other than alkenyl groups such as 3,3,3-trifluoropropyl groups and other halogenated alkyl groups, but methyl groups or phenyl groups are preferred from an industrial perspective.

Component (A2) is particularly preferably a straight-chain alkenyl group-containing organopolysiloxane, with examples including: dimethylpolysiloxane blocked with dimethylvinylsiloxy groups at both ends of a molecular chain; a dimethylsiloxane/methylphenylsiloxane copolymer blocked with dimethylvinylsiloxy groups at both ends of a molecular chain; a dimethylsiloxane/methylvinylsiloxane copolymer blocked with trimethylsiloxy groups at both ends of a molecular chain; a dimethylsiloxane/methylvinylsiloxane/methylphenylsiloxane copolymer blocked with trimethylsiloxy groups at both ends of a molecular chain; a dimethylsiloxane/methylvinylsiloxane copolymer blocked with silanol groups at both ends of a molecular chain; polymers in which a portion of the methyl groups of these polymers are substituted with alkyl groups other than methyl groups such as ethyl groups, propyl groups, and the like, and halogenated alkyl groups such as 3,3,3-trifluoropropyl groups and the like; polymers in which vinyl groups of these polymers are substituted with alkenyl groups other than vinyl groups such as allyl groups, butenyl groups, hexenyl groups, and the like; and mixtures of two or more of these polymers.

When Component (A) contains Component (A2), the composition may and preferably contains, as a curing agent, (D) an organohydrogenpolysiloxane, and (E) a catalytic amount of a hydrosilylation reaction catalyst.

### [(D) Organohydrogenpolysiloxane]

Component (D) is a main crosslinking agent of the composition of the present invention and while an organohydrogenpolysiloxane having two or more silicon atom-bonded hydrogen atoms in a molecule can be used without limitation, from the perspective of the flexibility and adhesion retention of the resulting cured product to a substrate, the number (average value) of silicon atom-bonded hydrogen atoms in the organohydrogenpolysiloxane molecule preferably does not exceed 8. In particular, at least (D1) a straight-chain organohydrogenpolysiloxane having a viscosity at 25°C of 1 to 1,000 mPa·s and containing on average 2 to 4 silicon atom-bonded hydrogen atoms in the molecule is preferably included, and at least on average, 1 thereof is in a molecular side chain.

Examples of Component (D1) include: a methylhydrogen siloxane-dimethylsiloxane copolymer capped at both molecular terminals with trimethylsiloxy groups and a methylhydrogen siloxane-dimethylsiloxane copolymer capped at both molecular terminals with dimethylhydrogensiloxy groups. Note, these examples are non-limiting, and some of the methyl groups may be substituted with phenyl groups, hydroxyl groups, alkoxy groups, and the like.

While the viscosity of Component (D1) at 25°C is not particularly limited, the viscosity is preferably within a range of 1 to 500 mPa·s, and particularly preferably within a range of 1 to 100 mPa·s. Moreover, from the perspective of preventing contact failure and the like, the amount of low molecular weight siloxane oligomer (octamethyltetrasiloxane (D4) and decamethylpentasiloxane (D5)) is preferably reduced or eliminated.

### [Amount of the organohydrogenpolysiloxane (crosslinking agent) in the composition]

The composition of the present invention particularly preferably contains Component (D) in an amount that results in 0.2 to 5.0 moles, 0.3 to 3.0 moles, or 0.4 to 2.0 moles of silicon-bonded hydrogen atoms in Component (A) per mole of alkenyl groups in Component (A), from the viewpoint of the rubber properties, mechanical strength, and adhesive properties of the resulting organopolysiloxane cured product.

### [(E) Catalyst for hydrosilylation reaction]

The hydrosilylation-reaction catalyst is a component used in curing the present composition. Examples include a platinum-based catalyst, a rhodium-based catalyst, and a palladium-based catalyst, and a platinum-based catalyst is preferred because a platinum-based catalyst can significantly promote curing of the present composition. Exemplary platinum-based catalysts include platinum fine powder, chloroplatinic acid, an alcohol solution of chloroplatinic acid, a platinum-alkenyl siloxane complex, a platinum-olefin complex, a platinum-carbonyl complex, and a catalyst in which these platinum-based catalysts are dispersed or encapsulated with a thermoplastic resin such as silicone resin, polycarbonate resin, acrylic resin, or the like, with a platinum-alkenyl siloxane complex particularly preferable. In particular, a 1,3-divinyl-1,1,3,3-tetramethyldisiloxane complex of platinum is preferred, and is preferably added in the form of an alkenylsiloxane solution of the complex. In addition, in terms of improving the handleability as well as the pot life of the composition, a platinum containing hydrosilylation reaction catalyst in microparticles dispersed and encapsulated with thermoplastic resin may be used. It should be noted that as the catalyst for promoting the hydrosilylation reaction, a non-platinum-based metal catalyst such as iron, ruthenium, iron/cobalt, or the like may be used.

On the other hand, a so-called high energy beam-activated or photoactivated catalyst such as a (methylcyclopentadienyl)trimethyl platinum(IV) complex, bis(2,4-pentanedionato) platinum(II) complex, or the like may be used as the hydrosilylation-reaction catalyst. By using such a hydrosilylation-reaction catalyst, the composition as a whole can be cured even at low temperatures triggered by irradiation with a high energy beam, storage stability is excellent, and reaction control is facilitated. Thus, the properties of excellent handling workability may be achieved. In this case, ultraviolet light is preferred as the high energy beam from the perspective of catalytic activation efficiency, and ultraviolet light in a wavelength range of 280 to 380 nm is preferred from the perspective of industrial use. Furthermore, the irradiation dose varies depending on the type of high energy beam activated catalyst, but in the case of ultraviolet light, the integrated irradiation dose at a wavelength of 365 nm is preferably within a range of 100 mJ/cm² to 100 J/cm².

The amount of the hydrosilylation catalyst added may be any catalytic amount, and more specifically, an amount that results in a metal atom concentration in a range of 0.01 to 500 ppm by mass, 0.01 to 100 ppm by mass, or 0.01 to 50 ppm by mass, relative to the total composition.

### [(B) Thermally conductive filler]

Component (B) is one or more type of thermally conductive filler for imparting thermal conductivity to the present composition and a thermally conductive member obtained by curing the present composition. Such Component (B) is preferably a powder and/or a fiber of at least one or more selected from the group consisting of a pure metal, an alloy, a metal oxide, a metal hydroxide, a metal nitride, a metal carbide, a metal silicide, a carbon, a soft magnetic alloy, and a ferrite. A metallic powder, a metal oxide powder, a metal nitride powder, or carbon powder is preferable. The shape of Component (B) is not particularly limited, and includes, for example, a spherical shape, a needle shape, a disk shape, a rod shape, and an indefinite shape, and is preferably a spherical shape or an indefinite shape. The average particle diameter of Component (B) is not particularly limited, but is preferably in a range of 0.01 to 500 µm, and more preferably in a range of 0.01 to 300 µm.

Component (B) is preferably silver powder, aluminum powder, aluminum oxide powder, zinc oxide powder, aluminum nitride powder, boron nitride powder, or graphite. When electrical insulation is required for the present composition, a metal oxide powder or a metal nitride powder is preferable, and in particular, aluminum oxide powder, zinc oxide powder, boron nitride power, or aluminum nitride powder is preferable.

The combination of Component (B) is not particularly limited, but examples include (b1-1) plate-shaped boron nitride powder having an average particle size of 0.1 to 150 µm, (b1-2) granular or spherically molded boron nitride powder having an average particle size of 0.1 to 500 µm, (b1-3) spherical fused-solidified and/or crushed aluminum oxide powder having an average particle size of 0.01 to 150 µm, (b1-4) amorphous or spherical aluminum nitride powder having an average particle size of 0.1 to 150 µm, or (b1-5) spherical and/or crushed graphite having an average particle size of 0.01 to 50 µm, or a mixture of two or more of these. One example of a suitable Component (B) is a mixture of two or more types of spherical and crushed aluminum oxide powders having an average particle diameter of 0.01 to 50 µm. In particular, as typified by the examples of the present application, the combination of aluminum oxide powder with a large particle diameter and aluminum oxide powder with a small particle diameter in the ratio following the closest packing theoretical distribution curve improves the packing efficiency and enables low viscosity and high thermal conductivity.

Furthermore, from the viewpoint of improving the thermal conductivity of the cured product without impairing the rubber physical properties of the thermally conductive composition of the present invention as well as workability during extrusion, Component (B) is preferably substantially free of thermally conductive fillers having an average particle size of less than 2.0 µm, in particular, aluminum nitride powder (hereinafter sometimes referred to as "coarse particles"). Here, "substantially free" means that the amount of thermally conductive fillers having an average particle size of less than 2.0 µm, particularly aluminum nitride powder, relative to the total thermally conductive filler is less than 0.5 vol.%, more preferably less than 0.1 vol.%, and particularly preferably below the detection limit (= 0.0 vol.%). On the other hand, if the thermally conductive filler contains 0.5 mass% or more of aluminum nitride powder having an average particle size of less than 2.0 µm, the technical effects of the present invention may not be fully achieved.

Furthermore, from the viewpoint of the rubber physical properties and good workability during extrusion of the thermally conductive composition according to the present invention, the following components may, and preferably are included:
Component (b2-1) - at least one thermally conductive filler selected from zinc oxide powder and aluminum oxide powder, having an average particle size in a range of 0.1 to 1.0 µm;
Component (b2-2) - at least one thermally conductive filler selected from aluminum nitride powder and aluminum oxide powder, which has an average particle size in a range of 2.0 to 29 µm and is selected from amorphous, rounded, and polyhedral shapes;
Component (b2-3) - Aluminum nitride powder having an average particle size of 30 µm or more and having a shape selected from irregular, rounded, and polyhedral shapes; and
Component (b2-4) - Aluminum nitride powder having an average particle size of more than 50 µm and a spherical shape.

These preferable thermally conductive fillers of the present invention will be described below. By selecting these thermally conductive fillers as Component (B) and using in combination with Component (C), the technical problems of the present invention may be particularly preferably resolved.

Component (b2-1) is at least one thermally conductive filler selected from zinc oxide powder and aluminum oxide powder, having an average particle size in a range of 0.1 to 1.0 µm. The shape thereof is not particularly limited, and includes a spherical shape, a needle shape, a disk shape, a rod shape, and an indefinite shape, and is preferably a spherical shape or an indefinite shape. Note that the term spherical shape includes polyhedral spherical shapes. The average particle size of Component (A) is preferably in a range of 0.10 to 0.75 µm, and may be in a range of 0.10 to 0.60 µm.

Component (b2-1) has the smallest average particle size among the thermally conductive fillers of the present invention, and is a thermally conductive filler that is added for the purpose of achieving close packing. By using this component in combination with aluminum nitride powder or the like described below within a certain quantitative range, the thermal conductivity of the cured product can be improved without impairing the physical properties of the rubber or the workability during extrusion.

Component (b2-2) is an aluminum nitride powder or aluminum oxide powder selected from amorphous, rounded, and polyhedral shapes with an average particle size in a range of 2.0 to 29 µm. The shape of Component (b2-2) is preferably irregular, and does not include spherical or polyhedral spherical shapes. In other words, spherical and polyhedral spherical components are explicitly excluded from Component (b2-2). Furthermore, in the present invention, "irregular shape" means that the particles do not have a fixed shape, but have a plurality of corners and protrusions, and are clearly distinguishable from symmetrical spheres or polyhedral spheres. Furthermore, "rounded" refers to a smooth particle with few corners and a rounded shape, but since there still are some corners and protrusions, the shape can be clearly distinguished from a symmetrical sphere or polyhedral sphere as mentioned above. Furthermore, a polyhedron does not have rounded spherical surfaces and is therefore clearly distinguishable from a symmetrical sphere or a polyhedron. A spherical particle is not preferred because there are no corners, making it difficult to make contact, and leading to poor thermal conductivity. In the present invention, the most suitable Component (b2-2) is aluminum nitride powder or aluminum oxide powder that is amorphous and has an average particle size in a range of 2.0 to 29 µm. The average particle size of Component (b2-2) is preferably in a range of 2.1 to 25 µm, and may be in a range of 2.4 to 15.0 µm. If the type of Component (b2-2) is different or the particle size is less than the lower limit, workability may be impaired, particularly during extrusion, or a paste-like composition might not be obtained at all, inhibiting extrusion from a cartridge or dispenser.

Component (b2-3) is an aluminum nitride powder having an average particle size of 30 µm or more, with shape selected from amorphous, rounded, and polyhedral shapes. When used in combination with components (b2-1) and (b2-2) in a certain quantitative range, in particular, this component achieves the technical effects of the present invention and provides extremely high thermal conductivity without causing any problems with anisotropy. Note that the Component (b2-2) is defined by the upper limit of the average particle size.

The shape of Component (b2-3) is preferably irregular, and does not include spherical or polyhedral spherical shapes. Note that the terms "irregular shape", "rounded shape", and "polyhedral shape" are the same as those described for Component (B), and Component (b2-3) having these shapes can be clearly distinguished from symmetrical spherical or polyhedral spherical particles in terms of shape. For the present invention, the most suitable Component (b2-3) is aluminum nitride powder that is irregular in shape and has an average particle size in a range of 30 µm or more. Furthermore, in the present invention, Component (b2-3) described below may be and preferably is used in combination with large diameter, spherical aluminum nitride powder.

The average particle size of Component (b2-3) is 30 µm or more, and may be in a range of 30 to 300 µm, or 30 to 180 µm. Furthermore, as described above, Component (b2-3) preferably does not include aluminum nitride powder having an average particle size of less than 2.0 µm, and the amount of these particles is 1 vol.% or less, and most preferably 0 vol.% or less, calculated to one significant digit. If the amount of small particle diameter aluminum nitride powder is high, the effect of the small particle diameter aluminum nitride powder may impair workability during extrusion even if a specific amount of Component (b2-3) is used, or a paste-like composition may not be obtained, impeding extrusion.

Component (b2-4) is a spherical aluminum nitride powder having an average particle size of more than 50 µm, and although it is an optional component in the present invention, this component further improves the technical effects of the present invention and provides extremely high thermal conductivity, particularly without causing problems with anisotropy, when used in combination with components (b2-1), (b2-2), and (b2-3) in a certain quantitative range. Note that Component (b2-2) is classified by the upper limit of the average particle size, and Component (b2-3) is classified by shape.

The average particle size of Component (b2-4) is greater than 50 µm, and may be in a range of 51 to 300 µm, or 51 to 180 µm. Furthermore, Component (b2-4) preferably does not include aluminum nitride powder having an average particle size of less than 2.0 µm, and the amount of these particles is 1 vol.% or less, and most preferably 0 vol.% or less, calculated to one significant digit. The reason for this is the same as described for Component (b2-3).

### [(B) Amount of Thermally Conductive Filler]

The composition of the present invention has an extremely high thermal conductivity of 9.0 W/mK or more, and can form a cured product having sufficient flexibility and stress relaxation properties for practical use, as well as a thermally conductive member made from the cured product. In addition, when filled into a cartridge or the like, the composition is in a paste form, which allows for excellent work efficiency during extrusion. To achieve this property, the blending amounts of the aforementioned components must be within the specific ranges.

Specifically, in the present invention, the amount of the thermally conductive filler, Component (B), must be in a range of 60 to 95 vol.%, preferably 65 to 95 vol.%, 70 to 93 vol.%, or 75 to 92 vol.%, based on the total solid content of the composition, in order to achieve high thermal conductivity. If the amount of the thermally conductive filler is less than the aforementioned lower limit, the thermal conductivity of the resulting composition is likely to be reduced, and the high thermal conductivity target of the present invention, in particular, a high thermal conductivity of 9.0 W/mK or more, might not be achieved. On the other hand, if the amount of Component (C) exceeds the upper limit of the aforementioned range, the viscosity of the resulting composition will be remarkably higher, or the initial hardness will be quite hard, and the handling workability, stress relaxing properties, and adhesion with respect to the substrate and the like may be reduced, even if Component (C) is added or used for surface-treating a filler.

Note that the total amount of the thermally conductive filler used as Component (B) is more preferably in a range of 600 to 6,000 parts by mass, and particularly preferably in a range of 800 to 4,000 parts by mass, per 100 parts by mass of Component (A). If the amount of the thermally conductive filler used is within the aforementioned volume percent range and the amount used relative to Component (A) satisfies the aforementioned range, the object of the present invention can be particularly suitably achieved.

Preferably, the amount of Component (b2-3) is in a range of 1.0 to 20.0 vol.%, more preferably 2.0 to 20.0 vol.%, and even more preferably 3.0 to 19.0 vol.%, based on the total solid content of the composition.

Component (D) is an optional component of the present invention, so the amount is in a range of 0.0 to 30.0 vol%, preferably 3.0 to 30.0 vol%, or 5.0 to 30.0 vol%, based on the total solid content of the composition.

Furthermore, the amount of the amorphous aluminum nitride powder selected from Component (b2-2) and Component (b2-3) is preferably 50 mass% or less, relative to the total solid content of the composition.

The total amount of the thermally conductive filler, which is aluminum nitride powder, is particularly preferably 60 mass% or less, relative to the total solid content of the composition. Aluminum nitride powder is prone to internal cracking due to ammonia gas generated by hydrolysis, and this tendency becomes more pronounced as the amount added increases, so using as little as possible is an effective solution to this problem.

Note that other thermally conductive fillers can improve the filling efficiency while providing low viscosity and high thermal conductivity by combining powders with large particle sizes and powders with small particle sizes in a ratio that follows the closest packing theoretical distribution curve, for example, in order to improve the filling efficiency.

### [Other Inorganic Fillers]

The composition of the present invention contains, as optional ingredients, inorganic fillers such as fumed silica, wet-produced silica, crushed quartz, titanium oxide, magnesium carbonate, zinc oxide, iron oxide, diatomaceous earth, carbon black, and the like, and inorganic fillers where the surface of the inorganic filler has been hydrophobically treated with Component (E), described below, and/or another organic silicon compound (silazane and the like) can be added. However, from the viewpoint of achieving the technical effects of the present invention, namely, high thermal conductivity, flexibility and stress relaxation properties of the cured product, ease of extrusion from a cartridge or the like, and adhesion to a base material, the composition may be substantially free of fillers other than the thermally conductive filler of Component (B). On the other hand, the above fillers may be used in combination for other functions such as improvement of mechanical strength (reinforcement) and adjustment of viscosity to the extent that the technical effect of the present invention is not impaired, and these fillers are included in one of the preferred embodiments of the present invention.

### [(C) Macromonomer-type treatment agent having a specific degree of polymerization]

Component (C) is one of the components that characterizes the composition of the present invention. Use of this component improves the extrusion and discharge properties of the thermally conductive composition from a cartridge or the like, providing a composition that is easy to fill into small-volume packages and has excellent work efficiency during application. Furthermore, even when the cured product is heat-aged at high temperature, the change in hardness of the cured product is small, and flexibility and stress relaxation properties are maintained, so good heat dissipation properties for heat dissipation sites can be maintained for a long period of time. In particular, Component (C) is a component that is critical in terms of the degree of siloxane polymerization a.

Specifically, Component (C) is an organopolysiloxane expressed by general formula (1): 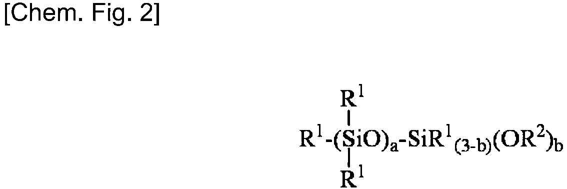 (In the formula, R¹ independently represents unsubstituted or substituted monovalent hydrocarbon groups not having a carbon-carbon double bond, and R² independently represents a hydrogen atom, alkyl group, alkoxyalkyl group, or acyl group, a is an integer from 40 to 90, and b is a number from 1 to 3) and having a viscosity at 25 °C of 10 to less than 10,000 mPa·s.

In General Formula (1), R¹ independently represents an unsubstituted or substituted monovalent hydrocarbon group, and examples include straight-chain alkyl groups, branched alkyl groups, cyclic alkyl groups, aryl groups, aralkyl groups, and alkyl halide groups. From an industrial perspective, R¹ is preferably a methyl group or a phenyl group, and is preferably a methyl group, from the perspective of heat resistance.

R² independently represents hydrogen atoms, alkyl groups, alkoxyalkyl groups, alkenyl groups, or acyl groups. From the perspective of surface treatment, R² is preferably an alkyl group, and is particularly preferably a methyl group or an ethyl group.

In general formula (1), when the degree of siloxane polymerization, represented by a, is within a specific range, the extrusion workability of the composition, as well as the heat aging properties and thermal conductivity of the cured product can be further improved. However, when the value of a is outside the specific range (for example, when a is 30 or 100), even if an organopolysiloxane expressed by general formula (1) is used, the extrusion workability of the composition according to the present invention and the heat aging properties of the cured product may not be sufficiently improved. Specifically, a in the general formula (1) must be a number in a range of 40 to 90, and is particularly preferably a number in a range of 40 to 90, 45 to 90, 50 to 90, or 50 to 80. Furthermore, b, which represents the number of terminal hydrolyzable groups expressed by OR², is an integer of 1 to 3, and is preferably 2 or 3. A suitable example of Component (c) in the present invention is polydimethylsiloxane, where b is 3, a trialkoxysiloxy group is provided at one end of the molecular chain, and R¹ is a methyl group.

Component (C) is a component that functions as a surface treatment agent for thermally conductive fillers and other inorganic fillers, and may coexist with these components in the composition. Preferably, the inorganic filler, Component (B), is surface-treated with Component (C), which is particularly preferred for the purpose of further improving the uniform dispersion of these components as well as the handling and workability of the resulting composition, particularly the extrusion workability of the composition, as well as the heat aging properties and thermal conductivity of the cured product.

[(C'), (C") Other surface treatment agents]
in addition to Component (C), the present invention may also contain one or more type of surface treatment agent selected from:
(C') a siloxane compound expressed by general formula (2)

   R^{alk}R³₂SiO(R³₂SiO)_{c}R³₂Si-R⁴-SiR³_{(3-d)}(OR⁵)_{d}
(where R^{alk} represents an alkenyl group, R³ independently represents an unsubstituted or substituted monovalent hydrocarbon group not having a carbon-carbon double bond, R⁴ represents an oxygen atom or divalent hydrocarbon group, R⁵ independently represents a hydrogen atom, alkyl group, alkoxyalkyl group, or acyl group, c represents an integer from 1 to 250, and d represents an integer from 1 to 3)
having an alkenyl group and a hydrolyzable silyl group at the terminus of the molecular chain, and having a viscosity at 25°C in a range of 10 to 10,000 mpa·s; and
(C') an alkoxysilane having an alkyl group with 6 or more carbon atoms in the molecule, or a hydrolysis condensate thereof.

Regarding Component (C'), R^{alk} in general formula (2) is an alkenyl group, and examples thereof include alkenyl groups having 2 to 10 carbon atoms, such as vinyl groups, allyl groups, and hexenyl groups. Component (C') has an alkenyl group at one terminal of the molecular chain, so it is effective as a surface treatment agent for Component (B), the thermally conductive filler, and may also improve the curing and adhesive properties when used in combination with other crosslinking agents.

In the formula, R³ independently represents an unsubstituted or substituted monovalent hydrocarbon group that does not have a carbon-carbon double bond, with examples including straight-chain alkyl groups, branched alkyl groups, cyclic alkyl groups, alkenyl groups, aryl groups, aralkyl groups, or halogenated alkyl groups, and is a methyl group or phenyl group from an industrial perspective, preferably a methyl group from a heat resistance perspective. R⁴ represents an oxygen atom or a divalent hydrocarbon group. Examples of the divalent hydrocarbon group serving as R⁴ include methylene groups and other alkylene groups; and ethylene oxyethylene groups, ethylene oxypropylene groups, and other alkyleneoxyalkylene groups. On the other hand, R⁴ may be and is preferably an oxygen atom.

In the formula, R⁵ independently represents a hydrogen atom, an alkyl group, an alkoxyalkyl group, or an acyl group, and is preferably an alkyl group, particularly preferably a methyl group or an ethyl group, from a surface treatment perspective. Component (C') has a hydrolyzable silyl group in the molecule with one-end structure expressed by Si(OR⁵), which provides excellent surface treatment effects when used in combination with Component (C).

In the formula, c represents the degree of polymerization of the diorganosiloxane units in Component (C') (excluding the terminals), and is an integer of 1 to 250, preferably an integer of 1 to 100, and particularly preferably an integer of 1 to 50. The integer d in the formula is an integer from 1 to 3, preferably 3. When d is 3, one terminal of Component (C') is particularly preferably a trimethoxysilyl group (-Si(OMe)₃).

The blending amount of Component (C) and Component (C') (total amount when both components are used) is not particularly limited as long as the amount is sufficient for surface treatment of the filler, but as an example, the amount is in a range of 0.005 to 100 parts by mass, preferably 0.05 to 100 parts by mass, and more preferably 0.5 to 50 parts by mass, per 100 parts by mass of Component (B) in the entire composition.

Component (C") is an alkoxysilane or a hydrolysis condensate thereof having an alkyl group with 6 or more carbon atoms in the molecule, and is particularly preferably used in combination with Component (C) as a surface treatment agent for Component (B).

Component (C"), similar to Component (C) and Component (C'), functions as a surface treatment agent for the thermally conductive filler, which is Component (B) in the composition, and is a component that improves the blending amount of the thermally conductive filler, improves the viscosity and flowability of the entire composition, and also improves the adhesive properties. Such alkoxysilanes preferably have alkyl groups of C6 or higher.

Specific examples of the alkyl group with 6 or more carbon atoms include hexyl groups, octyl groups, dodecyl groups, tetradecyl groups, hexadecyl groups, octadecyl groups, and other alkyl groups, benzyl groups, phenylethyl groups, and other aralkyl groups, and the like. Alkyl groups with 6 to 20 carbon atoms are particularly preferred.

Preferably, Component (C") is an alkoxysilane expressed by the following structural formula:

YₙSi(OR)₄₋ₙ

(where Y represents an alkyl group with 6 to 18 carbon atoms, R represents an alkyl group with 1 to 5 carbon atoms, and n represents a number from 1 to 3) wherein the OR group is exemplified by methoxy groups, ethoxy groups, propoxy groups, and butoxy groups, but methoxy groups and ethoxy groups are particularly preferred. Note that n represents 1, 2, or 3, and particularly preferably represents 1.

Examples of Component (C") include: C₆H₁₃Si(OCH₃)₃, C₈H₁₇Si(OC₂H₅)₃, C₁₀H₂₁Si(OCH₃)₃, C₁₁H₂₃Si(OCH₃)₃, C₁₂H₂₅Si(OCH₃)₃, C₁₄H₂₉Si(OC₂H₅)₃, and the like, and most suitably decyltrimethoxysilane.

The amount of Component (h) added is not particularly restricted so long as the amount is sufficient for surface treatment of Component (C) and for example, is within a range of 0.005 to 20 parts by mass with respect to 100 parts by mass of Component (a) in the entire composition, and is preferably 0.05 to 10 parts by mass, and more preferably 0.5 to 7.5 parts by mass.

### [(B) Surface Treatment of Thermally Conductive Filler and Other Inorganic Fillers]

In the present invention, the thermally conductive filler (B) and any inorganic filler used as needed (hereinafter, these components are collectively referred to as "filler") are preferably surface-treated with at least a portion of Component (C), and the surface treatment is particularly preferably carried out using one or more components selected from the group consisting of Component (C') and Component (C"). Furthermore, these fillers may also be treated with various surface treatment agents known as coupling agents, in addition to the aforementioned components. Surface treatment agents for treating the filler of the present invention include components (C), (C'), and (C"), as well as surfactants, other silane coupling agents, aluminum-based coupling agents, silicone-based surface treatment agents, and the like.

The method for surface treating the filler using these components is not particularly limited, but methods that can be used include direct treatment onto the filler, integral blending, a dry concentrate method, and the like. In the present invention, the most suitable example is a thermal surface treatment method in which a portion or all of Component (A) described below is mixed in advance with a surface treatment agent such as Component (C), and the filler is then sequentially mixed into the mixture, homogenized, and then heated (base heated), from the viewpoint of improving the fillability of the composition as a whole and the thermal conductivity, rubber physical properties, and adhesive strength of the cured product. In the surface treatment method, the mixture can be heated and stirred at 100 to 200°C under reduced pressure, and the temperature conditions and stirring time can be designed based on the amount of a sample, but are preferably within a range of 120 to 180°C and 0.25 to 10 hours. Note that the step of surface treatment of the filler is optional, but from the viewpoint of improving the extrusion workability and thermal conductivity of the present composition, a stepwise treatment step can be used, including a step in which at least a portion of the filler is surface treated with Component (C) and optionally further treated with Component (C'), and then the filler is surface treated with Component (C"). By using a surface treatment agent containing Component (C) of the present invention, the extrusion workability of the composition can be particularly improved.

The device used for mixing described above is not particularly limited, and examples include single or double-shaft continuous mixers, double rolls, Ross mixers, Hobart mixers, dental mixers, planetary mixers, kneader mixers, Henschel mixers, and the like.

### [(F) Heat resistance imparting agent]

In addition to the above components, the composition of the present invention may optionally contain a heat resistance imparting agent. The heat resistance imparting agent may be used alone, but the technical effects of the composition of the present invention and the cured product thereof may be further improved by using the heat resistance imparting agent in combination with the fatty acid compound (G) described below. The blended amount of the heat resistance-imparting agent may be within a range of 0.01 to 5.0 mass% (solid fraction) of the total composition, or may be within a range of 0.05 to 2.0 mass%, or 0.07 to 0.5 mass%.

Examples of the heat resistance-imparting agent include iron oxide, titanium oxide, cerium oxide, magnesium oxide, zinc oxide, and other metal oxides, cerium hydroxide and other metal hydroxides, phthalocyanine compounds, cerium silanolate, cerium fatty acid salts, reaction products of an organopolysiloxane with a cerium carboxylic acid salt, carbon black, and the like. Particularly suitably, Component (G) is a phthalocyanine compound, for example, an additive selected from the group consisting of a metal-free phthalocyanine compound and a metal-containing phthalocyanine compound disclosed in JP 2014-503680 W is suitably used, with copper phthalocyanine compounds particularly suitable among the metal-containing phthalocyanine compounds. One example of the most suitable and non-limiting heat resistance imparting agent is 29 H,31H-phthalocyaninato(2-)-N29,N30,N31,N32 copper. Such phthalocyanine compounds are commercially available, for example, Stan-tone (trademark) 40SP03 from PolyOne Corporation (Avon Lake, Ohio, USA.) Similarly, the heat aging properties at temperatures of 180°C or higher and the high-temperature heat resistance can be preferably improved by blending (F2) carbon black as a heat resistance imparting agent in an amount of 0.1 to 5 mass%, preferably 0.2 to 2 mass%, based on the total mass of the composition.

### [(G) Fatty acid compound]

If the composition of the present invention is curable, the composition may optionally contain, in addition to the above components, at least one fatty acid compound selected from fatty acid esters and fatty acid metal salts. This component is a component that inhibits hardness change during heat aging of the composition and of the cured component, which is a silicone-based thermally conductive member made by curing the composition. In particular, when the blending amount of the thermally conductive filler is within the above range, changes in hardness of the cured product during heat aging can be further suppressed by using Component (G) in addition to Component (C), and the cured product will not rapidly harden during heat aging, thereby preventing a loss of stress relaxation properties, flexibility, and base material adhesion. By using Component (G) in combination with, preferably, the heat resistance-imparting agent of Component (F) in the hydrosilylation-curable reactive composition, the obtained cured product will have high thermal conductivity, maintain the initial hardness and rubber physical properties, and achieve good stress relaxation properties, flexibility, and base material adhesion.

Component (G) is at least one or more of fatty acid, fatty acid ester, or fatty acid metal salt, and specific examples include: fatty acids such as caproic acid, caprylic acid, peralgonic acid, capric acid, undecanoic acid, lauric acid, myristic acid, palmitic acid, stearic acid, behenic acid, oleic acid, and the like; fatty acid esters that are alkyl esters of these fatty acids; alkali metal salts of fatty acids such as salts of sodium, lithium, potassium, and the like; and alkaline earth metal salts of fatty acids such as salts of calcium, and the like. Suitably, Component (G) is at least one or more of (G1) saturated fatty acids and saturated fatty acid metal salts, and is particularly preferably one or more of stearic acid, alkali metal salts of stearic acid, and alkaline earth metal salts of stearic acid.

If Component (G) is assumed to be used in combination with Component (C), the mechanism by which Component (G) and optionally Component (F) inhibits change in the hardness of the cured product has not been clearly identified, but it is speculated that the presence of limited amounts of fatty acid-based compounds such as fatty acids, fatty acid salts (soap), fatty acid esters, and the like in the silicone cured product matrix, whose heat resistance has been improved in the presence of Component (C) and optionally Component (F), causes the formation of a water-resistant and lubricating thin film or local structure made of these fatty acid-based compounds on or in the vicinity of the particle surfaces of the thermally conductive filler, chemically reducing or inactivating the particle surfaces at high temperatures and effectively preventing aggregation of the surfaces of the thermally conductive filler and the formation of coarse particles. However, Component (G) does not need to be used as a surface treatment agent for the thermally conductive filler, and the technical effect can be achieved simply by uniformly mixing with other components. Therefore, the timing of adding Component (G) to the composition of the present invention is not limited.

The amount of Component (G) to be added is preferably in a range of 0.05 to 2.0 parts by mass per 100 parts by mass of the thermally conductive filler (B) (total amount when a plurality of components are used). Note that if the amount of Component (G) is less than the lower limit, the amount may be insufficient to further improve the change in hardness of the cured product caused by using Component (C) in combination. On the other hand, similarly, if the amount of Component (G) exceeds the upper limit, the effect of improving suppression of changes in hardness of the cured product may be insufficient.

### [(H) Hydrosilylation reaction inhibitor, adhesion promoter, organic solvent and other additives]

The composition of the present invention essentially contains components (A) to (C). When Component (A) contains curable Component (A2), components (D) and (E) are preferably included, and more preferably one or more selected from components (C'), (C"), (F), and (G) are included. Components (C"), (F), and (G) are particularly preferably included in combination, but the composition may further contain the following other components. In particular, if the present composition is curable, the use of a hydrosilylation reaction inhibitor is particularly preferred.

### [Hydrosilylation Reaction Inhibitor]

If the composition of the present invention is curable, the composition preferably contains a hydrosilylation reaction inhibitor, from the viewpoint of handling and workability. The hydrosilylation reaction inhibitor is a component for inhibiting the hydrosilylation reaction of the thermally conductive organopolysiloxane composition of the present invention, and specific examples include acetylene-based inhibitors such as ethynylcyclohexanol, amine-based inhibitors, carboxylic acid ester-based inhibitors, phosphite-based inhibitors, and the like. The amount of the reaction inhibitor added is usually 0.001 to 5 mass% of the entire thermally conductive organopolysiloxane composition. In particular, acetylene compounds such as 3-methyl-1-butyn-3-ol, 3,5-dimethyl-1-hexyn-3-ol, and 3-phenyl-1-butyn-3-ol (=phenylbutynol); eneyne compounds such as 3-methyl-3-penten-1-yne and 3,5-dimethyl-3-hexen-1-yne; cycloalkenylsiloxanes such as 1,3,5,7-tetramethyl-1,3,5,7-tetravinylcyclotetrasiloxane and 1,3,5,7-tetramethyl-1,3,5,7-tetrahexenylcyclotetrasiloxane; methyltris-1,1-dimethyl-2-propynyloxysilane; and triazole compounds such as benzotriazole can be used without particular limitation for the purpose of improving the handling properties of the present composition.

### [Adhesion-imparting agent]

The composition of the present invention may also contain an adhesion-imparting agent for the purpose of improving the adhesive strength of the cured product and the permanent adhesion to the substrate. The adhesion-imparting agent that can be used in the present invention may be one or more selected from the following conventionally known adhesion-imparting agents, namely, reaction mixtures of an amino group-containing organoalkoxysilane and an epoxy group-containing organoalkoxysilane (including carbasilatrane derivatives and silatrane derivatives having a specific structure), organic compounds having two or more alkoxysilyl groups in a molecule, such as disilyalkane compounds (for example, 1,6-bis(trimethoxysilyl)hexane), and epoxy group-containing silanes or partially hydrolyzed condensates thereof, and two or more adhesion-imparting agents selected therefrom may and preferably are used in combination.

Preferably, the adhesion-imparting agent contains:
(L-1) an epoxy group-containing silane expressed by the general formula

   R^{a}ₙSi(OR^{b})₄₋ₙ
(wherein, R^{a} represents an organic group containing a monovalent epoxy group, R^{b} represents an alkyl group having from 1 to 6 carbon atoms, or a hydrogen atom, and n represents a number within a range of 1 to 3),
or a partial hydrolysis condensate thereof; and
(L-2) an organic compound having at least two alkoxysilyl groups in a molecule, in addition to containing a bond other than a silicon-oxygen bond between the silyl groups,
in a mass ratio of 5:95 to 95:5, preferably 50:50 to 95:5, and more preferably 60:40 to 90:30. Note that these components alone will improve the initial adhesion of organopolysiloxane cured products, but when used in combination at the mass ratio described above, the initial adhesion, adhesive durability, and adhesive strength (permanent adhesion) of the organopolysiloxane cured products may be greatly improved.

Examples of Component (L-1) described above include 3-glycidoxyprolyltrimethoxysilane, 3-glycidoxypropylmethyldimethoxysilane, 2-(3,4-epoxy cyclohexyl)ethyltrimethoxysilane, and 2-(3,4-epoxy cyclohexyl)ethylmethyldimethoxysilane.

Examples of Component (L-2) described above include 1,6-bis(trimethoxysilyl)hexane, 1,6-bis(triethoxysilyl)hexane, 1,4-bis(trimethoxysilyl)hexane, 1,5-bis(trimethoxysilyl)hexane, 2,5-bis(trimethoxysilyl)hexane, 1-methyldimethoxysilyl-6-trimethoxysilylhexane, 1-phenyldiethoxysilyl-6-triethoxysilylhexane, and 1,6-bis(methyldimethoxysilyl)hexane, and other disilyalkanes.

Reaction mixtures of amino group-containing organoalkoxysilanes and epoxy group-containing organoalkoxysilanes (including carbasilatrane and silatrane derivatives having specific structures) disclosed in Japanese Examined Patent Application Publication No. S52-8854 and Japanese Unexamined Patent Application H10-195085 may be further used as adhesion-imparting agents other than the components (L-1) and (L-2) above.

### [Organic solvents and other additives]

In addition to the components described above, the thermally conductive composition of the present invention may have optional components blended in to the extent that the purpose of the present invention is not impaired. Exemplary optional components include cold resistance imparting agents, flame retardants, pigments, dyes, etc. Furthermore, the thermally conductive composition of the present invention may optionally contain one or more commonly known surfactants such as antistatic agents; dielectric fillers; electrically conductive fillers; mold-release agents; thixotropic agents; antifungal agents, and the like. If desired, an organic solvent may be added.

### [Manufacturing Method and Form of Composition]

The thermally conductive composition of the present invention can be prepared by mixing the aforementioned components, and examples of the mixing device include the same devices as those exemplified for the surface treatment of the filler. As described above, Component (G) may be added at any timing after surface treatment and base heating of the filler, or added with the surface treatment agent of the filler, and either timing can be used to achieve the technical effects of the present invention.

More specifically, the composition of the present invention is preferably produced by either of the following methods for manufacturing (mixing process):
i) a production method including a step of mixing Component (A), a filler containing Component (B), and a surface treatment agent containing Component (C), followed by heating and mixing the mixture, and then optionally mixing Component (G) and other components; and
ii) a production method including a step of mixing Component (A), a filler containing the filler Component (B), optionally Component (G), and a filler containing Component (C), and the filler Component (B) containing Component (B), followed by a step of heating and mixing the mixture, and then a step of mixing other components.
Note that the heating conditions are the same as the base heat conditions described earlier for the surface treatment of the filler, and preferably, the entire mixture is made substantially uniform during mixing.

The thermally conductive composition according to the present invention may be a one-component composition, optionally including the aforementioned hydrosilylation reaction inhibitor and other components, or a multi-component composition containing two or more compositions that are stored separately. A multi-component composition must not simultaneously contain Component (A) containing Component (A2), Component (D), and Component (E). This is because when these components (main component, crosslinking agent, and catalyst) are blended simultaneously, a crosslinking reaction starts spontaneously and the storage stability of the composition is lost in a short period of time, and thus the long-term storage stability and handling workability, which are objectives of a multi-component composition, may not be achieved. Note that the multi-component composition is coated or applied after being mixed in a common container at the time of use using a mixer or other mechanical force, or using a dispenser or the like capable of mixing a plurality of components.

The thermally conductive composition of the present invention has extremely high thermal conductivity, and the cured product thereof has excellent flexibility and stress relaxation properties. In addition, the composition can be easily extruded from a cartridge or dispenser, and has excellent work efficiency, filling properties, and applicability. Therefore, even when the composition is used by filling a small amount into, for example, a small-scale syringe of about 10 to 300 mL, there is an advantage of excellent workability during application to a heat-dissipating site and during extrusion. Therefore, the present composition has an advantage of being easily filled into small-scale cartridges or syringes and is easily applicable to small-scale package production. In particular, the thermal conductive composition of the present invention contains Component (C), which is a macromonomer-type treating agent having a specific degree of siloxane polymerization, thereby improving the extrusion workability and making the composition particularly suitable for small-lot package production.

### [Use of Uncurable/Uncured Compositions]

The thermally conductive composition of the present invention can be applied in an uncurable or uncured state to a heat dissipation component or a circuit board on which the heat dissipation component is mounted, in order to obtain a heat dissipation structure containing an uncured heat dissipation member (examples of which include thermally conductive grease and uncured thermally conductive gap filler material).

### [Curability]

When at least a portion of Component (A) contains curable Component (A2), the thermally conductive composition of the present invention cures via a hydrosilylation reaction to form a cured product that has excellent thermal conductivity, suppresses changes in hardness even after heat aging, and is excellent in flexibility and stress relaxation properties. While not particularly limited thereto, the temperature conditions for curing the hydrosilylation curing type composition are normally within a range of 20°C to 200°C, preferably 20°C to 150°C, and more preferably within a range of 20 to 80°C. If desired, curing may be performed in a short time at a high temperature, or curing may be performed over a long time (for example, several hours to several days) at a low temperature such as room temperature, and there are no particular limitations. Note that curing may be triggered by irradiation of a high-energy beam by selecting a high-energy beam-activated or photo-activated catalyst as at least a portion of Component (E).

By using the thermally conductive composition according to the present invention, a heat dissipating structure can be obtained by applying the curable thermally conductive composition described above to a heat dissipating component or a circuit board on which the heat dissipating component is mounted, and forming a cured product at a temperature of 20°C to 150°C, preferably less than 130°C, such as in a range of 20 to 125°C, in order to provide a heat dissipating member.

### [Thermal conductivity]

The thermally conductive composition of the present invention can be stably and highly filled with a thermally conductive filler, and preferably has a thermal conductivity of 9.0 W/mK or more, particularly preferably 9.1 W/mK or more. Note that the thermally conductive composition of the present invention can be designed to have a thermal conductivity of 9.0 to 15.0 W/mK, and optionally a thermal conductivity of 9.1 to 14.0 W/mK, and the composition has excellent workability, such as extrudability and dispensability from a cartridge or the like. Furthermore, the present composition may be either non-curable or curable, and by including Component (C), which is a macromonomer-type treatment agent having a specific degree of siloxane polymerization, not only is the extrusion workability and thermal conductivity improved, but if the composition is curable, the heat aging properties, particularly at high temperatures, will be particularly excellent. Furthermore, by using components (F) and (G) (particularly the use of at least one of a phthalocyanine compound, Component (F1), and carbon black, Component (F2)), changes in hardness are further suppressed even after heat aging, and thus a thermally conductive cured product with excellent flexibility and stress relaxation properties can be achieved.

### [Applications and Heat Dissipation Structures]

The thermally conductive composition of the present invention and cured product thereof is useful as a heat transfer material (thermally conductive member) to be interposed at the interface between a thermal boundary surface of a heat-generating component and a heat dissipating member such as a heat sink or a circuit board for cooling of the heat-generating component by heat conduction, and thus a heat dissipating structure can be formed using the composition. Herein, although the type, size, and fine parts of a heat-generating component are not particularly limited, the thermally conductive composition of the present invention or the cured product obtained by curing this composition not only provides high thermal conductivity and excellent initial adhesion and adhesive strength to a member, but can also suppress changes in hardness over a long period of time, and even after heat aging can maintain flexibility and stress relaxation, and thus provides resistance to peeling or separating from heat generating members due to vibration and the like, has high adhesion and followability, and has excellent industrial productivity, making it suitable for automotive components, electrical or electronic components, and heat dissipating structures for electrical or electronic devices including cell-type secondary batteries.

Although the structure of such a heat dissipating structure is not particularly limited, an example is a heat dissipation structure with a heat dissipating member provided via a thermally conductive composition or cured product thereof on a heat dissipating component or a circuit board on which this heat dissipating component is mounted. Such a structure is exemplified, for example, by a structure in which an electronic component, which is a heat dissipating component, is mounted on a circuit board and the heat generated by the electronic component is dissipated by heat dissipating members via a thin film layer of the thermally conductive composition or a cured product thereof, and these members may be preferably provided not only on a horizontal surface but also on an inclined or vertical surface because the change in hardness after heat aging is minimal, flexibility and stress relaxation of the heat dissipating member is maintained, and the bonding properties and tracking properties are excellent, which are the features of the present invention.

In such a heat dissipating structure, the thickness of the thermally conductive composition or cured product thereof is not particularly limited, but may be within a range of 0.1 to 100 mm to efficiently transfer heat generated from an electronic Component filled with the composition or cured product thereof without a gap to a heat dissipating member.

Electrical and electronic devices equipped with a member made up of the thermally conductive composition are not particularly limited, but include: for example, secondary batteries such as cell-based lithium-ion electrode secondary batteries and cell-stack fuel cells; electronic circuit boards such as printed circuit boards; IC chips packaged with optical semiconductor elements such as diodes (LEDs), organic electric field element (organic EL), laser diodes and LED arrays; CPUs used in electronic devices such as personal computers, digital video disks, mobile phones, and smartphones; and LSI chips such as driver ICs and memory, and the like. In particular, in high performance digital switching circuits formed with high integration density, heat removal (heat dissipation) is a major factor in the performance and reliability of the integrated circuits. Thermally conductive members containing the thermally conductive organopolysiloxane composition of the present invention have superior heat dissipation and handling workability when applied to power semiconductor applications such as engine control, power train systems, air conditioner control, and the like in transportation equipment, and can also maintain a strong adhesive force with a member and achieve superior heat resistance and thermal conductivity when incorporated into in-vehicle electronic components such as electronic control units (ECU) and the like, even when used in harsh environments.

### EXAMPLES

The present invention will be described below by way of examples; however, the present invention is not limited thereto. In the Examples and Comparative Examples shown below, the following compounds or compositions were used as raw materials. Note that the average particle diameter of the thermally conductive filler is the cumulative average particle diameter D50 (median diameter) in the volume-based particle size distribution measured by the laser diffraction scattering method, and defines the coarse particle content (volume %) determined by the same method.

### [Preparation of Composition and Preparation of Thermally Conductive Organopolysiloxane Cured Product (Evaluation Sample)]

The components were mixed by the method described below to obtain the thermally conductive compositions of the Examples and Comparative Examples (hereinafter sometimes referred to as "thermally conductive organopolysiloxane compositions"). The thermally conductive organopolysiloxane composition was filled into a mold having a height of 6 mm, a length of 50 mm, and a width of 30 mm, and cured at 80°C for 30 minutes. The composition was then removed from the mold to obtain a cured thermally conductive organopolysiloxane. The hardness of the resulting cured thermally conductive organopolysiloxane was measured by the following method.

### [Hardness (Type E hardness)]

Hardness was measured by overlapping two thermally conductive organopolysiloxane cured products obtained under the above conditions and measuring the value after 3 seconds using an ASKER TYPE E hardness tester manufactured by ASKER.

### [Thermal conductivity]

Thermal conductivity was measured using two pieces of thermally conductive organoploysiloxane cured product obtained under the above conditions using a TPS-500 (hot disk method) manufactured by Kyoto Electronics Industry Co.

### [Hardness and thermal conductivity changes]

The change in hardness was calculated from the initial hardness of the thermally conductive organopolysiloxane cured product obtained under the above conditions and the hardness of the same cured product after aging in a 150°C oven for 100 hours.

The change in thermal conductivity was calculated from the initial thermal conductivity of the thermally conductive organopolysiloxane cured product obtained under the above conditions and the thermal conductivity of the same cured product after aging in a 150°C oven for 100 hours. When voids are formed inside the material due to aging, the thermal conductivity decreases, and it can be determined that internal bubbles and cracks have occurred.

### [Extrusion amount]

The extrusion amount was measured in terms of the weight extruded per minute by filling a 30 cc EFD syringe (manufactured by Nordson Corporation) with the thermally conductive composition and extruding the composition at an extrusion pressure of 80 psi.

The composition of the present invention is formed using each of the following components.

Component (C): an organopolysiloxane (= macromonomer type treatment agent) expressed by the formulas:
C-1: Formula: (CH₃)₃SiO[(CH₃)₂SiO]₄₀Si(OCH₃)₃
C-2: Formula: (CH₃)₃SiO[(CH₃)₂SiO]₅₀Si(OCH₃)₃
C-3: Formula: (CH₃)₃SiO[(CH₃)₂SiO]₆₀Si(OCH₃)₃
C-4: Formula: (CH₃)₃SiO[(CH₃)₂SiO]₇₀Si(OCH₃)₃
C-5: Formula: (CH₃)₃SiO[(CH₃)₂SiO]₃₃Si(OCH₃)₃
C-6: Formula: (CH₃)₃SiO[(CH₃)₂SiO]₉₀Si(OCH₃)₃
Non-C-1: Formula: (CH₃)₃SiO[(CH₃)₂SiO]₃₀Si(OCH₃)₃
Non-C-2: Formula: (CH₃)₃SiO[(CH₃)₂SiO]₁₀₀Si(OCH₃)₃
Non-C-3: Formula: (CH₃)₃SiO[(CH₃)₂SiO]₁₁₀Si(OCH₃)₃

Component (B):
B-1: Irregular zinc oxide powder with an average particle size of 0.12 µm
B-2: Polyhedral spherical α-type aluminum oxide powder with an average particle diameter of 2 µm
B-3: Irregular aluminum nitride powder with an average particle size of 18.5 µm
B-4: Irregular aluminum nitride powder with an average particle size of 100 µm
B-5: Spherical magnesium oxide powder with an average particle size of 120 µm

Component (A):
A-1: Dimethylpolysiloxane terminated at both molecular chain terminals with dimethylvinylsiloxy groups (molecular weight dispersity 1.14, number average molecular weight 3890, Vi content 2.13 mass%)

Component (D):
D-1: Methylhydrogen siloxane-dimethylsiloxane copolymer capped at both molecular terminals with trimethylsiloxy groups, average of 2 in the molecule, average of 2 in the side molecular chain (viscosity: 20 mPa·s, Si-H content: 0.10 mass%)
D-2: Methylhydrogen siloxane-dimethylsiloxane copolymer capped at both molecular terminals with trimethylsiloxy groups, average of 3 in the molecule, average of 3 in the side molecular chain (viscosity: 12 mPa·s, Si-H content: 0.21 mass%)

Component (E):
E-1: Complex of platinum and 1,3-divinyl-1,1,3,3-tetramethyldisiloxane with a platinum concentration of 5200 ppm

Component (H):
H-1: methyltris-1,1-dimethyl-2-propynyloxysilane

Component (F):
F-1: 29H,31H-phthalocyaninato(2-)-N29,N30,N31,N32-copper

Other components:
Component (C"-1): Decyltrimethoxysilane
Component (G-1): Calcium stearate (Fujifilm Wako Pure Chemical Industries, Ltd.)

### [Example 1]

1.00 parts by mass of Component (C-1), 2.31 parts by mass of Component (A-1), 0.78 parts by mass of Component (D-1), 0.120 parts by mass of Component (D-2), 0.20 parts by mass of Component (C"-1), and 0.10 parts by mass of Component (G-1) were weighed out, and over a period of 60 minutes, 14.28 parts by mass of Component (B-1), 28.0 parts by mass of Component (B-2), 19.0 parts by mass of Component (B-3), 18.5 parts by mass of Component (B-4), and 15.5 parts by mass of Component (B-5) were sequentially mixed in. After homogenization, the mixture was heated and mixed at 160 °C for 60 minutes under reduced pressure, and then cooled to room temperature.

0.001 parts by mass of Component (H-1) and 0.053 parts by mass of Component (F-1) were mixed uniformly into this mixture. Next, 0.06 parts by mass of Component (E-1) were mixed uniformly to obtain the thermally conductive silicone composition. Note that a T.K. HIVIS MIX (model number) manufactured by TOKUSHU KIKA KOGYO CO., LTD. was used as the mixing device for mixing each of the examples and comparison examples in the present invention.

### [Example 2]

A thermally conductive silicone composition was obtained in the same manner as in Example 1, except that 1.00 part by mass of Component (C-1) in Example 1 was replaced with 1.00 part by mass of Component (C-2).

### [Example 3]

A thermally conductive silicone composition was obtained in the same manner as in Example 1, except that 1.00 part by mass of Component (C-1) in Example 1 was replaced with 1.00 part by mass of Component (C-3).

### [Example 4]

A thermally conductive silicone composition was obtained in the same manner as in Example 1, except that 1.00 part by mass of Component (C-1) in Example 1 was replaced with 1.00 part by mass of Component (C-4).

### [Example 5]

A thermally conductive silicone composition was obtained in the same manner as in Example 1, except that 1.00 part by mass of Component (C-1) in Example 1 was replaced with 1.00 part by mass of Component (C-5).

### [Example 6]

A thermally conductive silicone composition was obtained in the same manner as in Example 1, except that 1.00 part by mass of Component (C-1) in Example 1 was replaced with 1.00 part by mass of Component (C-6).

### [Comparative Example 1]

A thermally conductive silicone composition was obtained in the same manner as in Example 1, except that 1.00 part by mass of Component (C-1) in Example 1 was replaced with 1.00 part by mass of Component (non-C-1).

### [Comparative Example 2]

A thermally conductive silicone composition was obtained in the same manner as in Example 1, except that 1.00 part by mass of Component (C-1) in Example 1 was replaced with 1.00 part by mass of Component (non-C-2).

### [Comparative Example 3]

A thermally conductive silicone composition was obtained in the same manner as in Example 1, except that 1.00 part by mass of Component (C-1) in Example 1 was replaced with 1.00 part by mass of Component (non-C-3).

Table 1 shows the composition, extrusion amount, hardness, and thermal conductivity of the resulting cured thermally conductive organopolysiloxane, and changes in hardness and thermal conductivity after heat aging of the thermally conductive organopolysiloxane compositions of Examples 1 to 6.
Table 2 shows the composition, extrusion amount, hardness, and thermal conductivity of the resulting cured thermally conductive organopolysiloxane, and changes in hardness and thermal conductivity after heat aging of the thermally conductive organopolysiloxane compositions of Comparative Examples 1 to 3.

**[Table 1]**

| | Example 1 | Example 2 | Example 3 | Example 4 | Example 5 | Example 6 |
|---|---|---|---|---|---|---|
| C-1 | 1.00 | | | | | |
| C-2 | | 1.00 | | | | |
| C-3 | | | 1.00 | | | |
| C-4 | | | | 1.00 | | |
| C-5 | | | | | 1.00 | |
| C-6 | | | | | | 1.00 |
| B-1 | 14.28 | 14.28 | 14.28 | 14.28 | 14.28 | 14.28 |
| B-2 | 28.00 | 28.00 | 28.00 | 28.00 | 28.00 | 28.00 |
| B-3 | 19.00 | 19.00 | 19.00 | 19.00 | 19.00 | 19.00 |
| B-4 | 18.50 | 18.50 | 18.50 | 18.50 | 18.50 | 18.50 |
| B-5 | 15.50 | 15.50 | 15.50 | 15.50 | 15.50 | 15.50 |
| A-1 | 2.31 | 2.31 | 2.31 | 2.31 | 2.31 | 2.31 |
| D-1 | 0.78 | 0.78 | 0.78 | 0.78 | 0.78 | 0.78 |
| D-2 | 0.12 | 0.12 | 0.12 | 0.12 | 0.12 | 0.12 |
| E-1 | 0.060 | 0.060 | 0.060 | 0.060 | 0.060 | 0.060 |
| H-1 | 0.001 | 0.001 | 0.001 | 0.001 | 0.001 | 0.001 |
| F-1 | 0.053 | 0.053 | 0.053 | 0.053 | 0.053 | 0.053 |
| C"-1 | 0.20 | 0.20 | 0.20 | 0.20 | 0.20 | 0.20 |
| G-1 | 0.10 | 0.10 | 0.10 | 0.10 | 0.10 | 0.10 |
| Molar ratio of SiH/alkenyl group | 0.57 | 0.57 | 0.57 | 0.57 | 0.57 | 0.57 |
| Extrusion rate (g/min) | 56 | 56 | 50 | 43 | 44 | 40 |
| Type E hardness | 45 | 49 | 46 | 49 | 52 | 61 |
| Thermal conductivity (W/m·K) | 11.0 | 10.8 | 10.8 | 10.7 | 10.7 | 10.7 |
| Type E hardness change (after 100 hours at 150°C) | +14 | +12 | +17 | +15 | +13 | +8 |
| Change in thermal conductivity (after 100 hours at 150°C) | +0.2 | +0.3 | +0.5 | +0.2 | +0.1 | +0.6 |

**[Table 2]**

| | Comparative Example 1 | Comparative Example 2 | Comparative Example 3 |
|---|---|---|---|
| non-C-1 | 1.00 | | |
| non-C-2 | | 1.00 | |
| non C-3 | | | 1.00 |
| B-1 | 14.28 | 14.28 | 14.28 |
| B-2 | 28.00 | 28.00 | 28.00 |
| B-3 | 19.00 | 19.00 | 19.00 |
| B-4 | 18.50 | 18.50 | 18.50 |
| B-5 | 15.50 | 15.50 | 15.50 |
| A-1 | 2.31 | 2.31 | 2.31 |
| D-1 | 0.78 | 0.78 | 0.78 |
| D-2 | 0.12 | 0.12 | 0.12 |
| E-1 | 0.060 | 0.060 | 0.060 |
| H-1 | 0.001 | 0.001 | 0.001 |
| F-1 | 0.053 | 0.053 | 0.053 |
| C"-1 | 0.20 | 0.20 | 0.20 |
| G-1 | 0.10 | 0.10 | 0.10 |
| Molar ratio of SiH/alkenyl group | 0.57 | 0.57 | 0.57 |
| Extrusion rate (g/min) | 58 | 39 | 33 |
| Type E hardness | 42 | 61 | 64 |
| Thermal conductivity (W/m·K) | 11.3 | 10.6 | 10.6 |
| Type E hardness change (after 100 hours at 150°C) | +20 | +5 | +2 |
| Change in thermal conductivity (after 100 hours at 150°C) | -0.2 | +0.5 | +0.4 |

As shown in Table 1, the thermally conductive silicone compositions of Examples 1 to 6, which used a macromonomer-type treatment agent having a degree of polymerization within the specified range as Component (C) according to the present invention, exhibited thermal conductivity exceeding 10 W/m · K, and extrusion rates exceeding 40 g/min, thus demonstrating good workability. Furthermore, the change in hardness of the cured product after aging at 150°C for 100 hours was 20 points or less, the stress relaxation properties and flexibility of the cured product were not impaired, the thermal conductivity was positive, and the thermal conductivity performance (= heat dissipation performance) did not decrease even after heat aging.

On the other hand, as shown in Table 2, the thermally conductive silicone composition of Comparative Example 1, which used a macromonomer-type treatment agent with a degree of polymerization below the specified range instead of Component (C) of the present invention, exhibited a thermal conductivity of over 10 W/m · K and an extrusion rate of over 40 g/min, demonstrating good workability. However, the hardness of the cured product changed by more than 20 points after aging at 150°C for 100 hours, and the stress relaxation properties and flexibility of the cured product were impaired. Furthermore, the thermal conductivity was negative, and the thermal conductivity (=heat dissipation performance) decreased after heat aging.

Furthermore, the thermally conductive silicone compositions of comparative examples 2 and 3, which used a macromonomer-type treatment agent with a degree of polymerization above the specified range instead of Component (C) according to the present invention, exhibited a thermal conductivity of over 10 W/m · K, but the extrusion rate did not reach 40 g/min, resulting in clearly inferior extrusion workability as compared to the examples.

### OVERVIEW

The results of Examples 1 to 6 indicate that the thermally conductive organopolysiloxane composition using components (A) to (C) of the present invention can achieve a high thermal conductivity of 10 W/m · K or more and good extrusion workability with an extrusion rate of more than 40 g/min, and the cured reaction product thereof shows little change in hardness and thermal conductivity, even when subjected to high-temperature thermal aging at 150°C for 100 hours. Therefore, it is expected that the composition will maintain good stress relaxation properties, flexibility, and thermal conductivity, and will be able to maintain stable thermal conductivity performance/heat dissipation performance even when used at high temperature for long periods of time.

On the other hand, the results of Comparative Examples 1 to 3 show that when a macromonomer-type treatment agent having a degree of polymerization outside the specified range is used instead of Component (C) according to the present invention, sufficient extrusion workability cannot be achieved, the amount of change in hardness during high-temperature heat aging is large, and the thermal conductivity may decrease. There is a strong concern that use at high temperatures for a long period of time may cause deterioration or cracking, or that stable thermal conductivity/heat dissipation performance may not be maintained.

## Claims

1. A thermally conductive composition, comprising:
(A) one or more matrix polymers having a viscosity at 25°C in a range of 10 to 1,000,000 mPa·s;
(B) one or more type of thermally conductive filler; and
(C) an organopolysiloxane expressed by general formula (1): 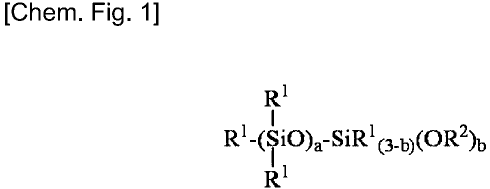
(In the formula, R¹ independently represents unsubstituted or substituted monovalent hydrocarbon groups not having a carbon-carbon double bond, and R² independently represents a hydrogen atom, alkyl group, alkoxyalkyl group, or acyl group, a is a number from 40 to 90, and b is a number from 1 to 3)
wherein
the amount of Component (B) is in a range of 60 to 95 vol.% based on the total solid content of the composition.

2. The thermally conductive composition according to claim 1, wherein Component (A) is (A0) one or more organopolysiloxane having a viscosity at 25°C in a range of 10 to 1,000,000 mPa·s.

3. The thermally conductive composition according to claim 1, wherein Component (A) is one or more organopolysiloxane selected from (A1) organopolysiloxanes not having a curing reactive group with a carbon-carbon double bond in the molecule, and (A2) organopolysiloxanes having a curing reactive group with a carbon-carbon double bond in the molecule.

4. The thermally conductive composition according to claim 1, wherein Component (A) contains at least:
(A2) an organopolysiloxane having a curing reactive group with a carbon-carbon double bond in the molecule;
(D) an organohydrogenpolysiloxane in an amount such that the amount of silicon-bonded hydrogen atoms in Component (D) is 0.2 to 5 moles per mole of curing reactive groups with a carbon-carbon double bond contained in Component (A); and
(E) a catalytic amount of a hydrosilylation reaction catalyst.

5. The thermally conductive composition according to claim 1, further comprising at least one compound selected from:
(C') a siloxane compound expressed by general formula (2)
R^{alk}R³₂SiO(R³₂SiO)_{c}R³₂Si-R⁴-SiR³_{(3-d)}(OR⁵)_{d}
(where R^{alk} represents an alkenyl group, R³ independently represents an unsubstituted or substituted monovalent hydrocarbon group not having a carbon-carbon double bond, R⁴ represents an oxygen atom or divalent hydrocarbon group, R⁵ independently represents a hydrogen atom, alkyl group, alkoxyalkyl group, or acyl group, c represents an integer from 1 to 250, and d represents an integer from 1 to 3)
having an alkenyl group and a hydrolyzable silyl group at the terminal of the molecular chain, and having a viscosity at 25°C in a range of 10 to 10,000 mPa·s; and
(C") an alkoxysilane having an alkyl group with 6 or more carbon atoms in a molecule, or a hydrolysis condensate thereof.

6. The thermally conductive composition according to claim 1, further comprising:
(F) a heat resistance imparting agent.

7. The thermally conductive composition according to claim 6, wherein Component (F) is a heat resistance imparting agent containing at least one component selected from (F1) a phthalocyanine compound, and (F2) carbon black.

8. The thermally conductive composition according to claim 1, further comprising (G) at least one type selected from the group consisting of fatty acids, fatty acid esters, and fatty acid metal salts.

9. The thermally conductive composition according to claim 8, wherein Component (G) is (G1) one or more compound selected from stearic acid, alkali metal salts of stearic acid, and alkaline earth metal salts of stearic acid.

10. The thermally conductive composition according to claim 1, wherein Component (B) is one or more thermally conductive filler selected from the group consisting of zinc oxide powder, aluminum oxide powder, and aluminum nitride powder.

11. The thermally conductive composition according to any one of claims 1 to 10, wherein the composition or a cured reaction product thereof has a thermal conductivity of 9.0 W/mK or more.

12. A thermally conductive member, comprising: the thermally conductive composition according to any one of claims 1 to 10, or a cured product thereof.

13. A heat dissipating structure, comprising the thermally conductive member according to claim 12.

14. A heat dissipation structure, wherein a heat dissipation member is provided on a heat dissipation component or a circuit board on which the heat dissipation component is mounted, with the thermally conductive composition or a cured product thereof according to any one of claims 1 to 10 interposed therebetween.

15. The heat dissipating structure according to claim 13 or claim 14, which is an electrical or electronic device.

16. The heat dissipating structure according to claim 13 or claim 14, which is an electrical or electronic component or a secondary battery.

17. A method for producing a thermally conductive composition according to any one of claims 1 to 10, comprising: a step of mixing components containing at least the components (A) to (C) and then heating and mixing the mixture; and a step of subsequently mixing other components.

18. A method of manufacturing a heat dissipating structure, comprising:
a step of applying the thermally conductive composition according to any one of claims 1 to 10 to a heat dissipating component or a circuit board on which the heat dissipating component is mounted, and then curing at a temperature less than 130°C.

19. A method for using the thermally conductive composition, comprising filling the thermally conductive composition according to any one of claims 1 to 10 into a package selected from syringes, cartridges, and dispensers having a capacity of 10 to 300 mL, and extruding the composition from the package to apply the composition to a heat-dissipating site.
